(19) **Europäisches Patentamt / European Patent Office / Office européen des brevets**

(11) **EP 3 128 499 A1**

(12) **EUROPEAN PATENT APPLICATION**
published in accordance with Art. 153(4) EPC

(43) Date of publication:
**08.02.2017 Bulletin 2017/06**

(21) Application number: **15772823.9**

(22) Date of filing: **03.04.2015**

(51) Int Cl.:
***G08G 1/16*** *(2006.01)*

(86) International application number:
**PCT/KR2015/003395**

(87) International publication number:
**WO 2015/152692 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.04.2014 KR 20140040632**

(71) Applicants:
• **Wise Automotive Corporation**
  **Seoul 151-015 (KR)**

• **SL Corporation**
  **Gyeongsan-si, Gyeongsangbuk-do 712-837 (KR)**

(72) Inventors:
• **LEE, Jung-Pyo**
  **Goyang-si**
  **Gyeonggi-do 411-737 (KR)**
• **RYU, Choon-Woo**
  **Incheon 406-840 (KR)**
• **PARK, Jae-Hong**
  **Seoul 151-015 (KR)**

(74) Representative: **Regimbeau**
**20, rue de Chazelles**
**75847 Paris Cedex 17 (FR)**

(54) **APPARATUS AND METHOD FOR GENERATING PERIPHERAL IMAGE OF VEHICLE**

(57) The present invention relates to an apparatus for creating an image of the area around a vehicle to obtain an image behind the vehicle and display the image on a monitor, and a method thereof The apparatus for creating an image of an area around a vehicle according to the present invention includes: a camera unit that is mounted on a vehicle and creates an image by photographing a peripheral area; an aerial-view image creation unit that creates an aerial-view image by converting the taken image into data on a ground coordinate system projected with the camera unit as a visual point; a movement information extraction unit that extracts information about movement of the vehicle on the basis of wheel pulses for a left wheel and a right wheel of the vehicle, the wheel pulses created by a wheel pulse sensor in the vehicle; a movement-area aerial-view image creation unit that creates a movement-area aerial-view image, which is an aerial view of the area to which the vehicle has moved, by matching the previous aerial-view image created by the aerial-view image creation unit to the movement information; and a combined aerial-view image creation unit that combines an aerial-view image, which is created after the previous aerial-view image is created, with the movement-area aerial-view image.

FIG. 2

**Description**

[Technical Field]

The present invention relates to an apparatus and method for peripheral image generation of vehicle. In particular, the present invention relates to an apparatus for creating an image of the area around a vehicle to obtain an image behind the vehicle and display the image on a monitor, and a method thereof

[Background Art]

In general, a vehicle is a machine that transports people or freight or performs various jobs while running on roads using a motor such as an engine therein as a power source, and a driver is supposed to safely drive a vehicle while viewing the forward area.

However, a driver has difficulty viewing the area behind the vehicle when driving the vehicle backward, for example, when parking. Accordingly, a display device that outputs images from a camera on the rear part of a vehicle on a monitor has been used as a device for displaying the area behind a vehicle.

In particular, a technology that can accurately find out the relative position between a vehicle and a parking spot in an image displayed on a monitor through a technology of changing an input image from a camera into an aerial view has been proposed in Korean Patent Application Publication No. 2008-0024772.

However, this technology has a problem in that it is impossible to display objects outside of the current visual field of the camera. For example, when a vehicle is driven backward for parking, the parking lines in areas that the vehicle has already passed (outside of the current visual field) cannot be displayed.

Accordingly, there is a need for a technology that can create an image for displaying objects outside of the current visual field of the camera. Further, it is necessary to consider a measure that can minimize system load and support an accurate and quick processing speed when developing this technology.

[Disclosure]

[Technical Problem]

Accordingly, the present invention has been made keeping in mind the above problems occurring in the prior art, and an object ofthe present invention is to make it possible to display objects outside of the current visual field of a camera by combining aerial views of images ofthe area around a vehicle that are taken at different times by a camera.

Another object of the present invention is to make it possible to prevent system load and allow for quick combination by using a wheel pulse sensor in a vehicle when combining aerial views of images of the area around a vehicle that are taken at different times by a camera.

Another object of the present invention is to make it possible to prevent system load and allow for quick combination by using a wheel pulse sensor and a steering wheel sensor in a vehicle when combining aerial views of images of the area around a vehicle that are taken at different times by a camera.

[Technical Solution]

In order to accomplish the above object, the present invention provides an apparatus for creating an image of an area around a vehicle, the apparatus including: an aerial-view image creation unit that creates an aerial-view image by converting an image of an area around a vehicle, which is taken by a camera unit mounted on the vehicle, into data on a ground coordinate system projected with the camera unit as a visual point; a movement information extraction unit that extracts information about movement of the vehicle on the basis of wheel pulses for a left wheel and a right wheel of the vehicle, the wheel pulses created on the basis of the amount of rotation of the wheels of the vehicle by a wheel pulse sensor in the vehicle; a movement-area aerial-view image creation unit that creates a movement-area aerial-view image, which is an aerial view of the area to which the vehicle has moved, by matching a previous aerial-view image created by the aerial-view image creation unit to the movement information; and a combined aerial-view image creation unit that combines an aerial-view image, which is created after the previous aerial-view image is created, with the movement-area aerial-view image.

The movement information extraction unit may include a movement distance extractor that extracts a movement distance of the vehicle on the basis of the average of the wheel pulse for the left wheel and the wheel pulse for the right wheel

The movement information extraction unit may include a pulse-based turning radius extractor that extracts a turning radius of the vehicle on the basis of the difference between the wheel pulses for the left wheel and the right wheel.

The movement information extraction unit may include a pulse-based movement position extractor that extracts a position to which the vehicle has moved, on the basis of the turning radius extracted by the pulse-based turning radius extractor and the movement distance extracted by the movement distance extractor.

The movement information extraction unit may include a steering-based turning radius extractor that senses a steering rotation angle of the vehicle through a steering wheel sensor in the vehicle and extracts a turning radius of the vehicle by calculating rotational angles of a left front wheel and a right front wheel of the vehicle on the basis of the steering rotation angle.

The movement information extraction unit may include a steering-based movement position extractor that extracts a position to which the vehicle has moved, on the basis of the turning radius extracted by the steering-based turning radius extractor and the movement distance extracted by the movement distance extractor.

The movement information extraction unit may include a gear-based extraction instructor that gives an instruction to extract information about movement of the vehicle when the vehicle is moving backward by checking gears of the vehicle.

The gear-based extraction instructor may extract a change in the traveling direction of the vehicle by analyzing a change in the pattern ofthe wheel pulses for the left wheel and the right wheel when the vehicle is in a neutral gear.

The change in the traveling direction of the vehicle may be extracted by analyzing the change in pattern of a rising edge or a falling edge of a wheel pulse repeated between the left wheel and the right wheel.

In order to accomplish the above object, the present invention provides a method of creating an image of the area around a vehicle, the method including: creating an aerial-view image by converting an image of an area around a vehicle, which is taken by a camera unit mounted on the vehicle, into data on a ground coordinate system projected with the camera unit as a visual point, by means of an aerial-view image creation unit; extracting information about movement of the vehicle on the basis of wheel pulses for a left wheel and a right wheel of the vehicle, the wheel pulses created on the basis of the amount of rotation of the wheels of the vehicle by a wheel pulse sensor in the vehicle, by means of a movement information extraction unit; creating a movement-area aerial-view image, which is an aerial view of the area to which the vehicle has moved, by matching a previous aerial-view image created by the aerial-view image creation unit to the movement information, by means of a movement-area aerial-view image creation unit; and creating a combined aerial-view image by combining an aerial-view image, which is created after the previous aerial-view image is created, with the movement-area aerial-view image, by means of a combined aerial-view image creation unit.

The extracting of movement information may include extracting a movement distance of the vehicle on the basis of the average of the wheel pulse for the left wheel and the wheel pulse for the right wheel.

The extracting of movement information may include extracting a turning radius of the vehicle on the basis of the difference between the wheel pulses for the left wheel and the right wheel.

The extracting of movement information may include extracting a position to which the vehicle has moved, on the basis of the turning radius extracted in the extracting of a turning radius and the movement distance extracted in the extracting of a movement distance.

The extracting of movement information may include sensing a steering rotation angle of the vehicle through a steering wheel sensor in the vehicle, and extracting a turning radius of the vehicle by calculating rotational angles of a left front wheel and a right front wheel of the vehicle on the basis of the steering rotation angle.

The extracting of movement information may include extracting a position to which the vehicle has moved, on the basis of the turning radius extracted in the extracting of a turning radius and the movement distance extracted in the extracting of a movement distance.

The method may further include giving an instruction to extract the information about movement of the vehicle when the vehicle is moving backward by checking gears in the vehicle, after the creating of a previous aerial-view image.

The giving of an instruction may extract a change in traveling direction of the vehicle by analyzing a change in pattern of the wheel pulses for the left wheel and the right wheel when the vehicle is in a neutral gear.

A change in traveling direction of the vehicle may be extracted by analyzing a change in a pattern of a rising edge or a falling edge of a wheel pulse repeated between the left wheel and the right wheel.

[Advantageous Effects]

According to the present invention, it is possible to display objects outside of the current visual field of a camera by combining aerial views of images around a vehicle that are taken at different times by a camera.

Further, according to the present invention, it is possible to prevent system load and allow for quick combination by using a wheel pulse sensor in a vehicle when combining aerial views of images around a vehicle that are taken at different times by a camera.

Further, according to the present invention, it is possible to prevent system load and allow for quick combination by using a wheel pulse sensor and a steering wheel sensor in a vehicle when combining aerial views of images around a vehicle that are taken at different times by a camera.

[Description of Drawings]

FIG. 1 is a schematic view showing the main parts of an apparatus for creating an image of the area around a vehicle according to the present invention.

FIG. 2 is a block diagram of an apparatus for creating an image of the area around a vehicle according to the present invention.

FIG. 3 is a view showing a positional relationship in coordinate conversion performed by an apparatus for creating an image of the area around a vehicle according to the present invention.

FIG. 4 is a view for illustrating the concept of an apparatus for creating an image of the area around a vehicle according to the present invention.

FIGS. 5 to 10 are views showing a process that is performed by an apparatus for creating an image of the area around a vehicle according to the present invention.

FIG. 11 is a view showing a first embodiment of a movement information extraction unit that is a component of an apparatus for creating an image of the area around a vehicle according to the present invention.

FIG. 12 is a view showing a wheel pulse for the left rear wheel of a vehicle created by an apparatus for creating an image of the area around a vehicle according to the present invention.

FIG. 13 is a view showing a wheel pulse for the right rear wheel of a vehicle created by an apparatus for creating an image of the area around a vehicle according to the present invention.

FIG. 14 is a view for illustrating a method of extracting a movement position of a vehicle in accordance with the first embodiment of a movement information extraction unit.

FIG. 15 is a view showing a second embodiment of a movement information extraction unit that is a component of an apparatus for creating an image of the area around a vehicle according to the present invention.

FIG. 16 is a view for illustrating a steering wheel sensor according to the second embodiment of a movement information extraction unit.

FIG. 17 is a view for illustrating a method of calculating rotational angles of the left front wheel and the right front wheel of a vehicle in accordance with the second embodiment of a movement information extraction unit.

FIG. 18 is a view for illustrating a method of extracting a movement position of a vehicle in accordance with the second embodiment of a movement information extraction unit.

FIG. 19 is a view for illustrating a method of extracting a change in traveling direction of a vehicle by analyzing pattern changes in a wheel pulse for a rear wheel of a vehicle.

FIG. 20 is a view for illustrating a method of extracting a change in traveling direction of a vehicle by analyzing pattern changes in a wheel pulse for a rear wheel of a vehicle.

FIG. 21 is a flowchart of a method of creating an image of the area around a vehicle according to the present invention.

FIG. 22 is a view for illustrating a step of giving an instruction to extract information about movement of a vehicle in the method of creating an image of the area around a vehicle according to the present invention.

[Mode for Invention]

The present invention will be described hereafter in detail with reference to the accompanying drawings. Repetitive descriptions and well-known functions and configurations that may unnecessarily make the spirit of the present invention unclear are not described in detail.

The embodiments are provided to more completely explain the present invention to those skilled in the art. Therefore, the shapes and sizes of the components in the drawings may be exaggerated for more clear explanation.

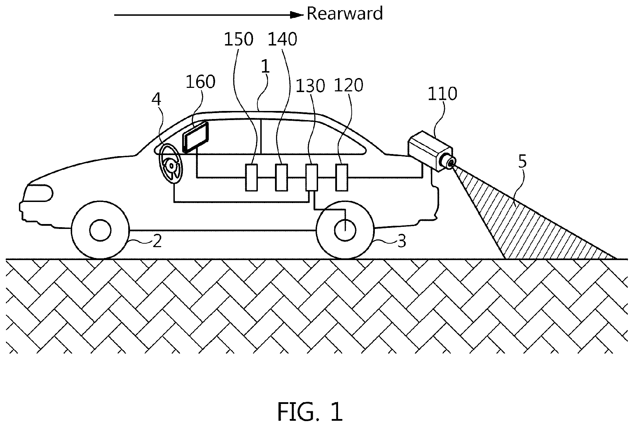

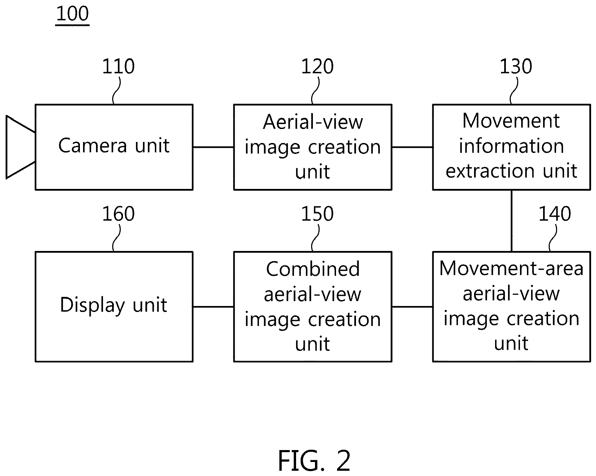

The basic system configuration of an apparatus for creating an image of the area around a vehicle according to the present invention is described with reference to FIGS. 1 and 2.

FIG. 1 is a schematic view showing the main parts of an apparatus for creating an image of the area around a vehicle according to the present invention. FIG. 2 is a block diagram of an apparatus for creating an image of the area around a vehicle according to the present invention.

Referring to FIG. 1, an apparatus 100 for creating an image of the area around a vehicle according to the present invention includes: a camera unit 110 that is mounted on a vehicle 1 and creates an image by photographing a peripheral area 5; an aerial-view image creation unit 120 that creates an aerial-view image by converting the taken image into data on a ground coordinate system projected with the camera unit 110 as a visual point; a movement information extraction unit 130 that extracts information about movement of the vehicle on the basis of wheel pulses for a left wheel 3 and a right wheel (not shown) of the vehicle, the wheel pulses created on the basis of the amount of rotation of the wheels of the vehicle by a wheel pulse sensor in the vehicle 1; a movement-area aerial-view image creation unit 140 that creates a movement-area aerial-view image, which is an aerial view of the area that the vehicle 1 moves, by matching the previous aerial-view image created by the aerial-view image creation unit 120 to the movement information; and a combined aerial-view image creation unit 150 that combines an aerial-view image, which is created after the previous aerial-view image is created, with the movement-area aerial-view image.

Further, the apparatus may further include a display 160 that is mounted in the vehicle 1 and displays the combined aerial-view image.

The aerial-view image creation unit 120, the movement information extraction unit 130, the movement-area aerial-view image creation unit 140, and the combined aerial-view image creation unit 150, which are main parts of the apparatus 100 for creating an image of the area around a vehicle according to the present invention, are electronic devices for processing image data, including a microcomputer, and may be integrated with the camera unit 1.

The camera unit 110 is mounted on the vehicle 1 and creates an image by photographing the peripheral area 5.

As shown in FIG. 1, the camera unit 110 is disposed on the rear part of the vehicle and includes at least one camera (for example, a CCD camera).

The aerial-view image creation unit 120 creates an aerial-view image by converting the image created by the camera unit 110 into data in a ground coordinate system projected with the camera unit 110 as a visual point.

A well-known method may be used, as will be described below, to convert the image created by the camera unit 110 into an aerial-view image. The position of an image on the ground (for example, showing a parking spot) is obtained as an aerial-view image by performing reverse processing of common perspective conversion.

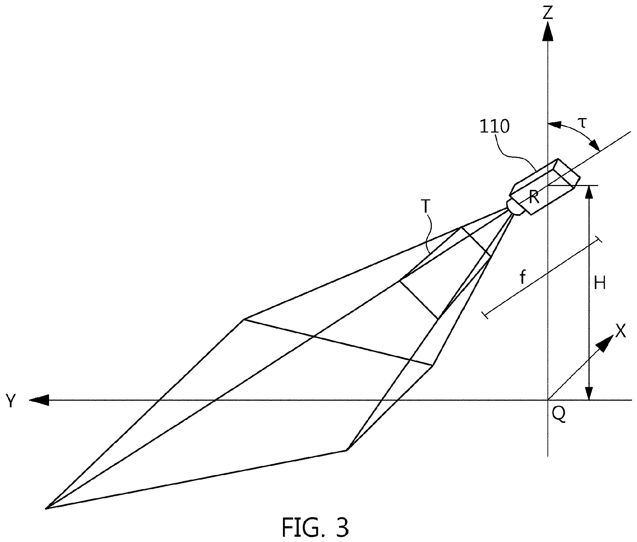

FIG. 3 is a view showing a positional relationship in coordinate conversion that is performed by an apparatus for creating an image of the area around a vehicle according to the present invention.

In detail, as shown in FIG. 3, the position data of an image on the ground is projected to a screen plan T having a focal distance f from the position R of the camera unit 110, whereby perspective conversion is performed.

In detail, it is assumed that the camera unit 110 is positioned at a point R (0, 0, H) on the Z-axis and monitors an image on the ground (X-Y plan) at an angle $\tau$. Accordingly, as shown in the following Equation 1, 2-D coordinates ($\alpha$, $\beta$) on the screen plan T can be converted (reversely projected) to coordinates on the ground.

[Equation 1]

$$\begin{bmatrix} x \\ y \end{bmatrix} = \begin{bmatrix} H \cdot \alpha / (-\beta \cos\tau + f \sin\tau) \\ H \cdot (\beta \sin\tau + f \cos\tau) / (-\beta \cos\tau + f \sin\tau) \end{bmatrix}$$

That is, by using Equation 1, it is possible to convert projected image (showing an aerial-view image) into an image on the screen of the display unit 160 and then display the converted image on the display unit 160.

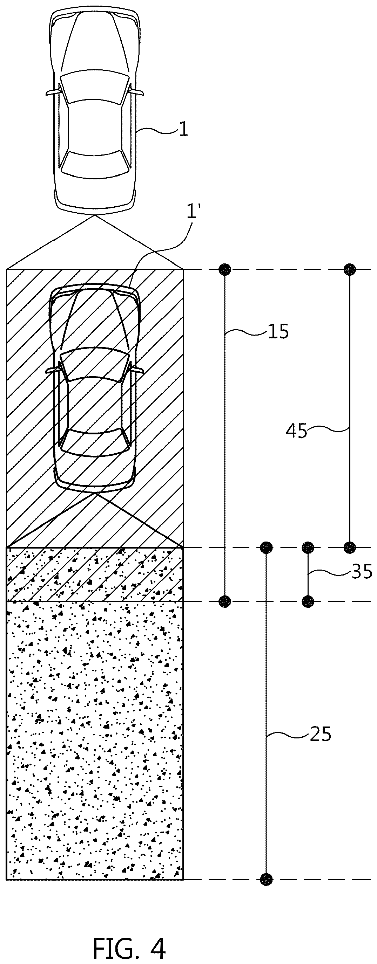

The concept of the apparatus for creating an image of the area around a vehicle according to the present invention is described hereafter with reference to FIG. 4.

FIG. 4 shows a vehicle 1 at a time point T and a vehicle 1' at a time point T+1 after a predetermined time passes from the time point T.

The aerial-view image of the vehicle 1 created at the time point T is referred to as a previous aerial-view image 15 and the aerial-view image of the vehicle 1' created at the time point T+1 is referred to as a subsequent aerial-view image 25.

The previous aerial-view image 15 and the subsequent aerial-view image 25 have an aerial-view image 35 in the common area. That is, the aerial-view image 35 is an aerial-view image commonly created at the time points T and T+1.

Further, when the vehicle 1' is seen from a side at the time point T+1, the part except for the aerial-view image 35 in the common area in the previous aerial-view image 15 is a past aerial-view image 45.

The past aerial-view image 45 is an object outside of the visual field of the camera unit 110 on the rear part of the vehicle 1' at the time point T+1. That is, it means an object that is not photographed at the time point T+1 that is the current time point.

The apparatus 100 for creating an image of the area around a vehicle according to the present invention has another object of including the past aerial-view image 45 in the image displayed on the display unit 160 in the vehicle 1' at the time point T+1. That is, a combined image of the subsequent aerial-view image 25 and the past aerial-view image 45 in the current visual field of the camera unit 110 is displayed.

The combined image is referred to as a combined aerial-view image. In order to create the combined aerial-view image, it is required to accurately combine the subsequent aerial-view image 25 and the past aerial-view image 45 with a high processing speed and minimum system load.

Further, it is required to extract information about movement of the vehicle in order to accurately extract the past aerial-view image 45. The past aerial-view image 45 is obtained by extracting the movement information, so it is also referred to as a movement-area aerial-view image. A detailed method of extracting the information about movement of the vehicle will be described below.

Therefore, the combined aerial-view image means an image that is a combination of the subsequent aerial-view image 25, which is created at the time point T+1 after the previous aerial-view image 15 is created at the time point T, and the movement-area aerial-view image.

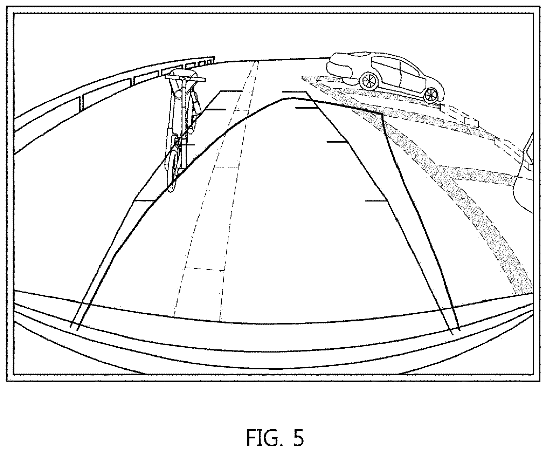

Hereafter, the operation of the movement information extraction unit 130, the movement-area aerial-view image creation unit 140, and the combined aerial-view image creation unit 150 is described with reference to FIGS. 5 to 10.

FIGS. 5 to 10 are views showing the process that is performed by the apparatus for creating an image ofthe area around a vehicle according to the present invention.

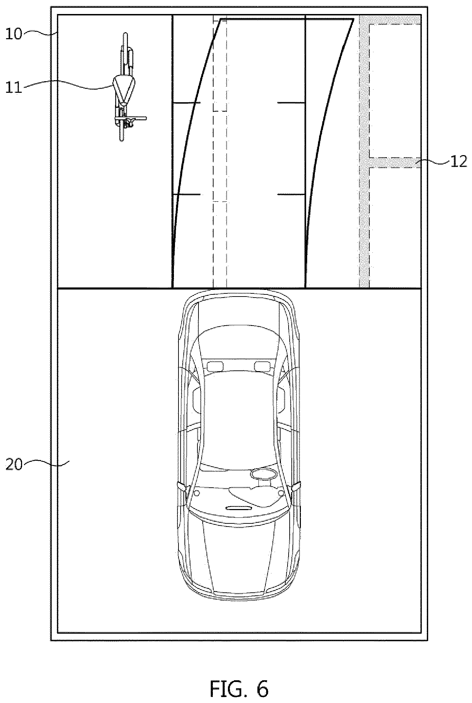

FIG. 5 shows an image taken by the camera unit 110 and displayed on the display unit 160 and FIG. 6 shows an aerial-view image 10 (hereafter, referred to as a previous aerial-view image) converted from the image shown in FIG. 5 by the aerial-view image creation unit 120 and then displayed on the display unit 160.

Referring to FIG. 5, it can be seen that there is a bicycle 11 and some parking lines 12 behind the vehicle 1. Further, referring to FIG. 6, it can be seen that the image of the bicycle 11 and the parking lines 12 has been converted in an aerial-view image.

Further, referring to FIG. 6, since the camera unit 110 is mounted on the rear part of the vehicle 1, the actual rectangular parking spot is distorted on the display unit, depending on the vehicle 1 and the distance between the camera unit 110 and the parking lines.

Referring to FIG. 6, it can be seen that an aerial-view image is not created for an object 20 outside of the current visual field of the camera unit 110.

Accordingly, a driver cannot see parking lines or objects outside of the current visual field of the camera unit 110 when parking the vehicle, so it is difficult to intuitively recognize the position of the vehicle 1 and an accident may be caused.

The apparatus 100 for creating an image of the area around a vehicle according to the present invention has a function of creating an aerial-view image even of the object 20 outside of the current visual field of the camera unit 110 in order to solve this problem.

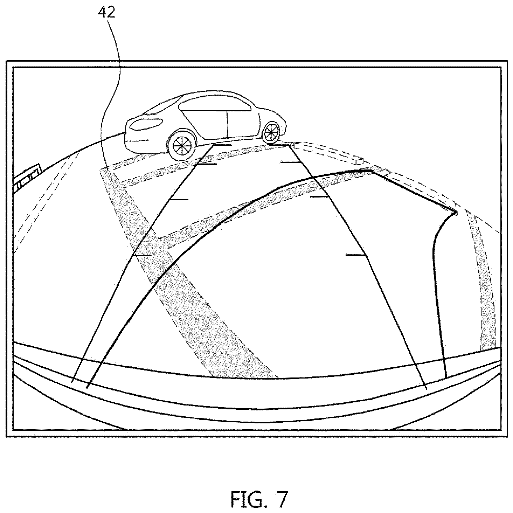

FIG. 7 shows an image taken by the camera unit 110 after the driver of the vehicle turns a steering wheel 4 counterclockwise and drives the vehicle backward a predetermined distance from the space shown in FIG. 5.

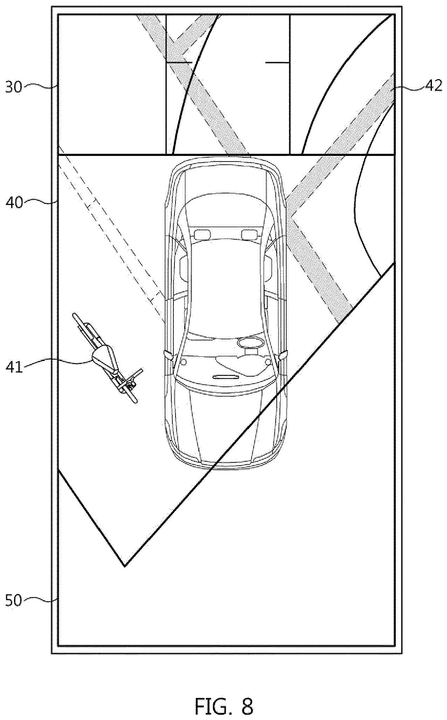

FIG. 8 shows an aerial-view image 30 (hereafter, referred to as a subsequent aerial-view image) converted from the image shown in FIG. 7 by the aerial-view image creation unit 120.

The location of the previous aerial-view image 10 may be included in the subsequent aerial-view image 30, depending on the movement distance ofthe vehicle 1.

Further, an aerial-view image 40 that is not shown in FIG. 7 is shown in FIG. 8. The aerial-view image 40 not shown in FIG. 7 means an aerial-view image for an object outside of the current visual field of the camera unit 110 on the vehicle. Accordingly, referring to both FIGS. 7 and 8, the bicycle 41 is an object outside of the current visual field of the camera unit 110.

The aerial-view image 40 not shown in FIG. 7 is a virtual image and existed before the vehicle 1 was driven backward, that is, in the previous aerial-view image 10, so even an object that is not in the current visual field of the camera unit 110 can be displayed.

However, there is a part 50 without an aerial-view image, because the part did not exist before the vehicle 1 was driven backward, that is, in the previous aerial-view image. In detail, this is because no images are captured before the vehicle 1 starts to be driven.

As a result, the driver can see both of the subsequent aerial-view image 30 and the aerial-view image 40 not shown in FIG. 7 through the display unit 160.

Accordingly, the driver can check the bicycle 41 and the parking lines 42 outside of the current visual field of the camera unit 110 when driving backward, so it is possible to preclude an accident.

An aerial-view image obtained by combining the subsequent aerial-view image 30 and the aerial-view image 40 not shown in FIG. 7 is referred to as a combined aerial-view image.

However, it is required to extract the past image that is the aerial-view image 40 not shown in FIG. 7 in order to create the combined aerial-view image and it is required to extract the information about movement of the vehicle in order to extract the past image.

The movement information extraction unit 130 extracts the information about movement of the vehicle and the detailed method will be described below.

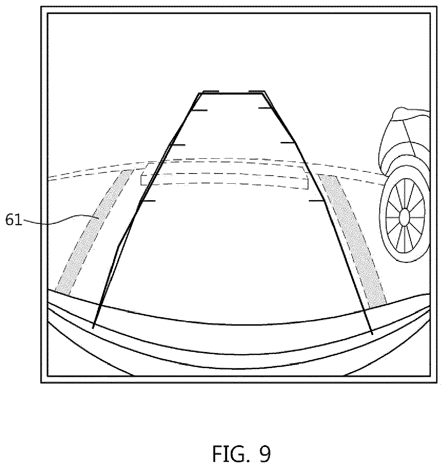

FIG. 9 is an image created by the camera unit 110 after the vehicle moves backward a predetermined distance from the space shown in FIG. 7.

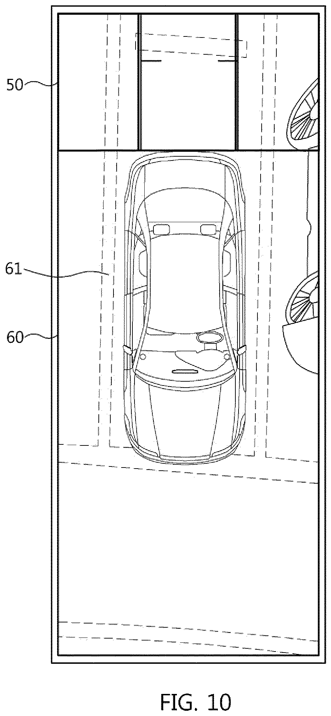

FIG. 10 shows an aerial-view image 50 (hereafter, referred to as a last aerial-view image) converted from the image shown in FIG. 9 by the aerial-view image creation unit 120.

The parts where the previous aerial-view image 10 and the subsequent aerial-view image 30 were may be included in the last aerial-view image 50, depending on the movement distance of the vehicle 1.

Further, an aerial-view image 60 that is not shown in FIG. 9 is shown in FIG. 10. The aerial-view image 60 not shown in FIG. 9 means an aerial-view image of objects not in the current visual field of the camera unit 110 on the vehicle.

The aerial-view image 60 not shown in FIG. 9 is a virtual image and had existed before the vehicle 1 was driven backward, that is, in the previous aerial-view image 10 and the subsequent aerial-view image 30, so even an object that is not in the current visual field of the camera unit 110 can be displayed.

Accordingly, the driver can see both the last aerial-view image 50 and the aerial-view image 60 not shown in FIG. 9 through the display unit 160.

As a result, the driver can check parking lines 42 outside of the current visual field of the camera unit 110 when driving backward, so it is possible to prevent an accident.

An aerial-view image obtained by combining the last aerial-view image 50 and the aerial-view image 60 not shown in FIG. 9 is referred to a combined aerial-view image.

However, it is required to extract the past image that is the aerial-view image 60 not shown in FIG. 9 in order to create the combined aerial-view image and it is required to extract the information about movement of the vehicle in order to extract the past image.

The movement information extraction unit 130 extracts the information about movement of the vehicle and the detailed method will be described below.

Hereafter, the function of the movement information extraction unit 130 that is a component of the apparatus 100 for creating an image of the area around a vehicle according to the present invention is described, and first and second embodiments that are various embodiments of the movement information extraction unit 130 are described in detail.

The movement information extraction unit 130 extracts information about movement of the vehicle on the basis of wheel pulses for a left wheel 3 and a right wheel (not shown) of the vehicle, in which the wheel pulses are obtained on the basis of the amount of rotation of wheels of the vehicle by a wheel pulse sensor in the vehicle 1.

The front wheels 2 of the vehicle 1 are rotated differently from the rear wheels of the vehicle 1, so it is more effective to use the rear wheels of the vehicle 1 in order to accurately extract the movement distance of the vehicle 1.

Accordingly, a rear wheel is mainly addressed to describe the movement information extraction unit 130. However, this description does not limit the scope of the present invention to processing of the rear wheel by the movement information extraction unit 130.

Further, there is a method that uses a yaw rate sensor and a vehicle speed sensor in the related art to extract the information about movement of the vehicle 1, but the related art has a limit as to the accuracy of the extracted information about movement of the vehicle when the vehicle 1 is continuously moving, for example, when it is being parked or driven backward, as in embodiments of the present invention.

Accordingly, the present invention discloses a technology that extracts information about movement of the vehicle on the basis of wheel pulses for a left wheel 3 and a right wheel (not shown) of the vehicle, in which the wheel pulses are obtained on the basis of the amount of rotation of wheels of the vehicle by a wheel pulse sensor in the vehicle 1.

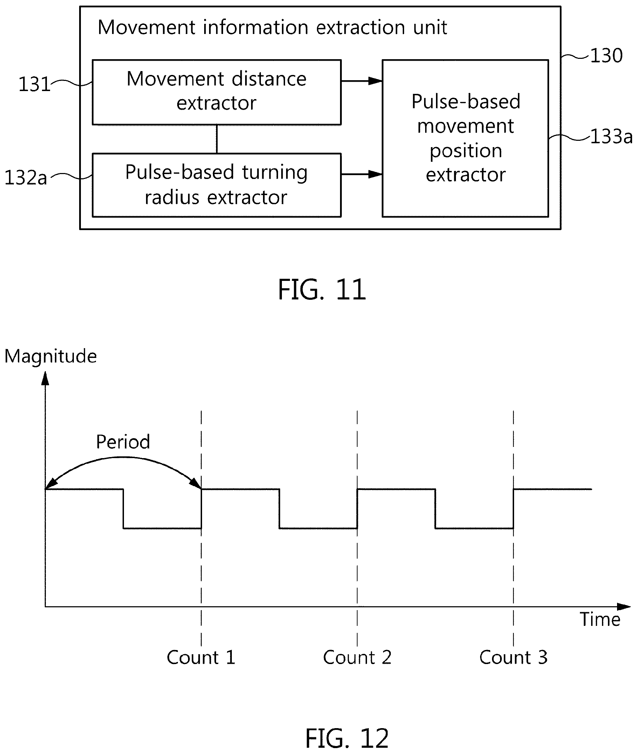

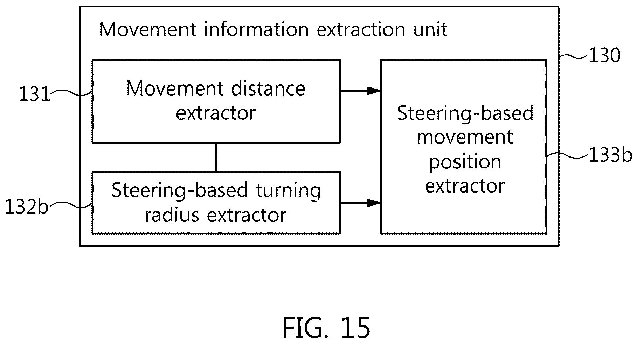

FIG. 11 is a view showing a first embodiment of a movement information extraction unit that is a component of an apparatus for creating an image of the area around a vehicle according to the present invention. FIG. 15 is a view showing a second embodiment of a movement information extraction unit that is a component of an apparatus for creating an image of the area around a vehicle according to the present invention.

Referring to FIG. 11, a movement information extraction unit 130 according to the first embodiment includes a movement distance extractor 131, a pulse-based turning radius extractor 132a, and a pulse-based movement position extractor 133a.

Referring to FIG. 15, a movement information extraction unit 130 according to the first embodiment includes a movement distance extractor 131, a steering-based turning radius extractor 132b, and a steering-based position extractor 133b.

The movement distance extractor 131 included in both of the movement information extractors 130 according to the first and second embodiments is described first, after which the first and second embodiments are described separately in detail.

1. Movement distance extractor 131

The movement distance extractor 131 extracts information about movement of the vehicle on the basis of the average of the wheel pulse for a left wheel and the wheel pulse for a right wheel obtained by a wheel pulse sensor in the vehicle 1.

The wheel pulse sensor is mounted in the vehicle 1 and generates wheel pulse signals, depending on the movement of left wheels and right wheels of the vehicle 1.

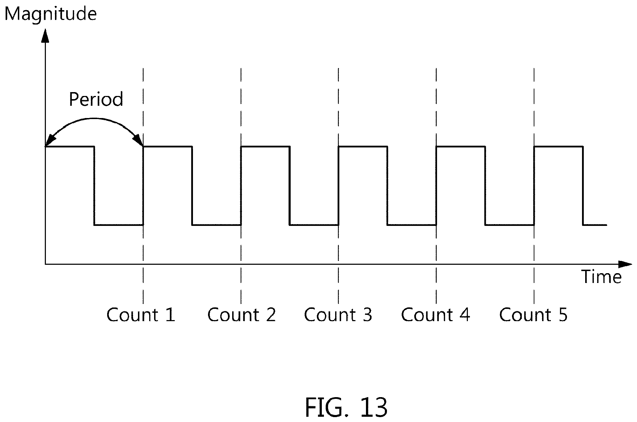

FIG. 12 is a view showing a wheel pulse for the left rear wheel of a vehicle created by an apparatus for creating an image of the area around a vehicle according to the present invention. FIG. 13 is a view showing a wheel pulse for the right rear wheel of a vehicle created by an apparatus for creating an image of the area around a vehicle according to the present invention.

Changes in a wheel pulse signal for a left rear wheel of the vehicle 1 over time can be seen from FIG. 12. One is counted at each period of the wheel pulse signal, and the distance per period is 0.0217m.

Similarly, changes in a wheel pulse signal for a right rear wheel of the vehicle 1 over time can be seen from FIG. 13. One is counted at each period of the wheel pulse signal, and the distance per period is 0.0217m

In detail, referring to FIGS. 12 and 13, the wheel pulse signal for the left rear wheel at the time point T has a count value of 3 because three periods are counted, but the wheel pulse signal for the right rear wheel has a count value of 5 because five periods are counted.

That is, it can be seen that the right rear wheel has moved a longer distance during the same time. Accordingly, it may be possible to determine that the vehicle 1 is driven backward with the steering wheel turned clockwise, assuming that the vehicle 1 is being driven backward. The method of determining whether a vehicle is being driven forward or backward will be described below.

It is possible to extract the movement distance of the vehicle on the basis of the wheel pulses for the left rear wheel and the right rear wheel shown in FIGS. 12 and 13, using the following Equations 2 to 4.

[Equation 2]

$$K1 = (WP_{in}(t + \Delta t) - WP_{in}(t)) \times WP_{res}$$

In Equation 2, K1 is the movement distance of the inner rear wheel. For example, when the vehicle 1 is driven backward with the steering wheel turned clockwise, the right rear wheel is the inner rear wheel, but when the vehicle 1 is driven backward with the steering wheel turned counterclockwise, the left rear wheel is the inner rear wheel.

Further, $WP_{out}$ is a wheel pulse count value of the outer rear wheel and $WP_{res}$ is the resolution of a wheel pulse signal, in which the movement distance per period signal is 0.0217m. That is, $WP_{res}$ is a constant 0.0217, which may be changed in accordance with the kind and setting of the wheel pulse sensor.

Further, t is the time before the vehicle is moved and $\Delta t$ is the time taken while the vehicle is moved.

[Equation 3]

$$K2 = (WP_{out}(t + \Delta t) - WP_{out}(t)) \times WP_{res}$$

In Equation 3, K2 is the movement distance of the outer rear wheel.

For example, when the vehicle 1 is driven backward with the steering wheel turned clockwise, the left rear wheel is the outer rear wheel, but when the vehicle 1 is driven backward with the steering wheel turned counterclockwise, the right rear wheel is the outer rear wheel.

Further, $WP_{out}$ is a wheel pulse count value of the outer rear wheel and $WP_{res}$ is the resolution of a wheel pulse signal, in which the movement distance per period signal is 0.0217m. That is, $WP_{res}$ is a constant of 0.0217, which may be changed in accordance with the kind and setting of the wheel pulse sensor.

Further, t is the time before the vehicle is moved and $\Delta t$ is the time taken while the vehicle is moved.

[Equation 4]

$$K = \frac{K_1 + K_2}{2}$$

In Equation 4, K is the movement distance of an axle. The movement distance of an axle is the same as the movement distance of the vehicle.

Further, K1 is the movement distance of the inner rear wheel and K2 is the movement distance of the outer rear wheel. That is, the movement distance of the axle that is the movement distance of the vehicle is the average of the movement distance of the inner wheel of the vehicle and the movement distance of the outer wheel of the vehicle.

Accordingly, the movement distance extractor 131 can extract the movement distance of the vehicle 1 through Equations 2 to 4.

2. First Embodiment

A method of extracting the turning radius of the vehicle 1 and the coordinates of the movement position in accordance with the first embodiment, using the movement distance of the vehicle 1 extracted by the movement distance extractor 131 is described.

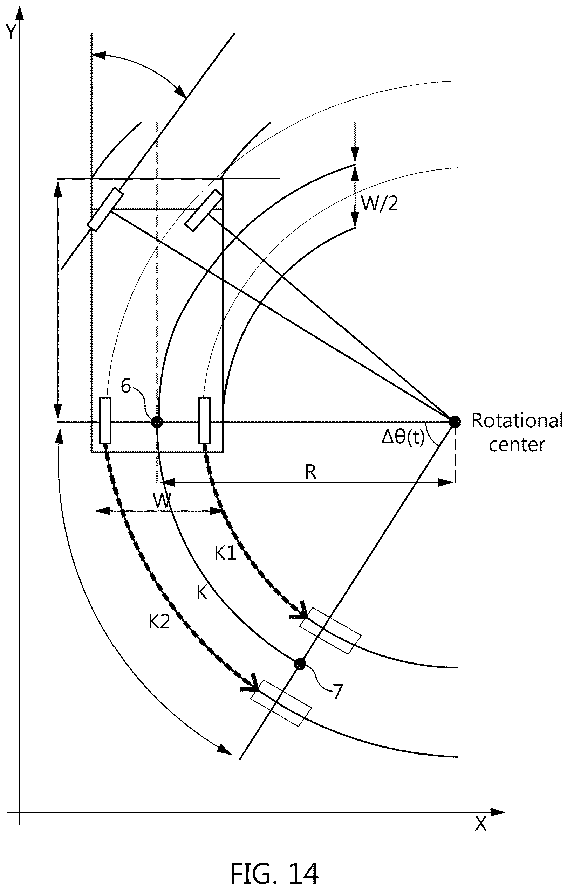

FIG. 14 is a view for illustrating a method of extracting a movement position of a vehicle in accordance with the first embodiment of a movement information extractor.

Referring to FIG. 14, the current position 6 of the vehicle is the center between the left rear wheel and the right rear wheel and is the same as the current center position of the axle. Further, it can be seen that the position 7 after the vehicle 1 is moved is the center between the left rear wheel and the right rear wheel of the vehicle at the movement position.

The pulse-base turning radius extractor 132a extracts the turning radius of the vehicle on the basis of the difference between the wheel pulses of the left rear wheel and the right rear wheel. The method of extracting the turning radius may use the following Equations 5 to 8.

[Equation 5]

$$K_1 = (R - \frac{W}{2})\Delta\theta(t)$$

In Equation 5, K1 is the movement distance of the inner rear wheel and R is the turning radius of the vehicle. In detail, the turning radius means the turning radius of the axle.

W is the width of the vehicle. In detail, W is the distance between the left rear wheel and the right rear wheel. Further, $\Delta\theta(t)$ is variation in the angle of the vehicle during time t.

[Equation 6]

$$K_2 = (R + \frac{W}{2})\Delta\theta(t)$$

In Equation 6, K2 is the movement distance of the outer rear wheel and R is the turning radius of the vehicle. In detail, the turning radius means the turning radius of the axle.

Further, W is the width of the vehicle and $\Delta\theta(t)$ is variation in the angle of the vehicle during time t.

[Equation 7]

$$K_2 - K_1 = W\Delta\theta(t)$$

In Equation 7, K2 is the movement distance of the outer rear wheel and K1 is the movement distance of the inner rear wheel. Further, W is the width of the vehicle and $\Delta\theta(t)$ is variation in the angle of the vehicle during time t.

[Equation 8]

$$\Delta\theta(t) = \frac{K_2 - K_1}{W}$$

Equation 8 is obtained by rearranging Equation 7 about $\Delta\theta(t)$ that is the variation in the angle of the vehicle

during time t.

That is, Δθ(t) that is the variation of the angle of the vehicle for time t can be obtained by dividing the value, obtained by subtracting K1 obtained in Equation 6 from K2 obtained in Equation 5, by the predetermined W that is the width ofthe vehicle.

Accordingly, all of K1, K2, Δθ(t), and W can be found, so R that is the turning radius of the vehicle can be obtained by substituting the values into Equation 5 or 6.

The pulse-based movement position extractor 133a extracts the movement position of the vehicle on the basis of the turning radius extracted by the pulse-based turning radius extractor 132a and the movement distance extracted by the movement distance extractor 131. The method of extracting the turning radius may use the following Equations 9 to 17.

[Equation 9]

$$x_c(t) = x(t) + R\cos\theta(t)$$

In Equation 9, $x_c(t)$ is the position of the x-coordinate of a rotational center and x(t) is the position of the x-coordinate of the current center position of the axle that is the current position of the vehicle. The current center position of the axle means the center position between the left rear wheel and the right rear wheel, which was described above. Further, θ(t) is the current angle of the vehicle.

[Equation 10]

$$y_c(t) = y(t) + R\sin\theta(t)$$

In Equation 10, $y_c(t)$ is the position of the y-coordinate of a rotational center and y(t) is the position of the x-coordinate of the current center position of the axle that is the current position ofthe vehicle. Further, θ(t) is the current angle ofthe vehicle.

[Equation 11]

$$x'(t) = x(t) - x_c(t) = -R\cos\theta(t)$$

In Equation 11, x'(t) is the position of the x-coordinate of the current center position of the axle when the rotational center is the origin and x(t) is the position of the x-coordinate of the current center position of the axle that is the current position of the vehicle. Further, θ(t) is the current angle of the vehicle.

[Equation 12]

$$y'(t) = y(t) - y_c(t) = -R\sin\theta(t)$$

In Equation 12, y'(t) is the position of the x-coordinate of the current center position of the axle when the rotational center is the origin and y(t) is the position of the y-coordinate of the current center position of the axle that is the current position of the vehicle. Further, θ(t) is the current angle ofthe vehicle.

[Equation 13]

$$\begin{pmatrix} x'(t+\Delta t) \\ y'(t+\Delta t) \end{pmatrix} = \begin{pmatrix} \cos\Delta\theta(t) & -\sin\Delta\theta(t) \\ \sin\Delta\theta(t) & \cos\Delta\theta(t) \end{pmatrix} \begin{pmatrix} x'(t) \\ y'(t) \end{pmatrix}$$

In Equation 13, x'(t+Δt) is the position of the X-coordinate of the center position after the axle is moved when the rotational center is the origin and y'(t+Δt) is the position of the y-coordinate of the center position after the axle is moved when the rotational center is the origin.

Further, Δθt is variation in the angle of the vehicle during time t, x'(t) is the position of the x-coordinate of the current center position of the axle when the rotational center is the origin, and y'(t) is the position of the y-coordinate of the current center position of the axle when the rotational center is the origin.

That is, Equation 13 is a rotation conversion equation for calculating the center position of the axle that has moved during time Δt, when the rotational center is the origin.

[Equation 14]

$$x(t + \Delta t) = x'(t + \Delta t) + x_c(t)$$

In Equation 14, x(t+Δt) is the position of the X-coordinate of the center position after the axle is moved. That is, it does not mean the value of an absolute position, but means a position determined without considering the rotational center as the origin. Further, x'(t+Δt) is the position of the x-coordinate of the center position after the axle is moved when the rotational center is the origin and $x_c(t)$ is the position of the X-coordinate of the rotational center.

[Equation 15]

$$y(t + \Delta t) = y'(t + \Delta t) + y_c(t)$$

In Equation 15, y(t+Δt) is the position of the y-coordinate of the center position after the axle is moved. That is, it does not mean the value of an absolute position, but means a position determined without considering the rotational center as the origin.

Further, y'(t+Δt) is the position of the y-coordinate of the center position after the axle is moved when the rotational center is the origin and $y_c(t)$ is the position of the y-coordinate of the rotational center.

[Equation 16]

$$x(t + \Delta t) = x(t) + R(\cos \theta(t) - \cos \Delta \theta(t) \cos \theta(t) + \sin \Delta \theta(t) \sin \theta(t))$$

Equation 16 is obtained by substituting Equations 9 to 13 into Equation 14 and is the final equation capable of obtaining x(t+Δt) that is the position of the X-coordinate of the center position after the axle is moved.

[Equation 17]

$$y(t + \Delta t) = y(t) + R(\sin \theta(t) - \sin \Delta \theta(t) \cos \theta(t) - \cos \Delta \theta(t) \sin \theta(t))$$

Equation 17 is obtained by substituting Equations 9 to 13 into Equation 15 and is the final equation capable of obtaining y(t+Δt) that is the position of the y-coordinate of the center position after the axle is moved.

As described above, the pulse-based movement position extractor 133a can extract the center position of the axle that has moved, using Equations 9 to 17.

3. Second Embodiment

A method of extracting the turning radius of the vehicle 1 and the coordinates of the movement position in accordance with the second embodiment, using the movement distance of the vehicle 2 extracted by the movement distance extractor 131 is described.

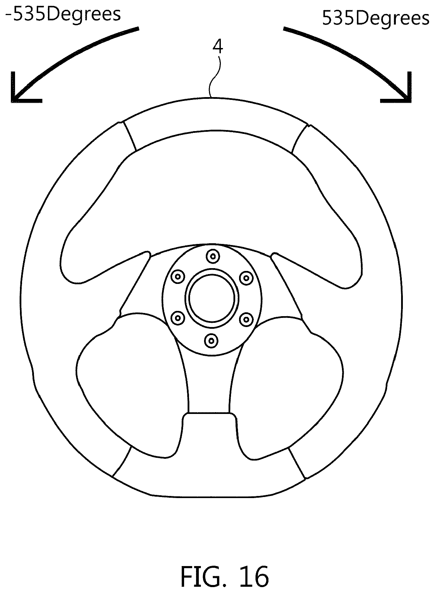

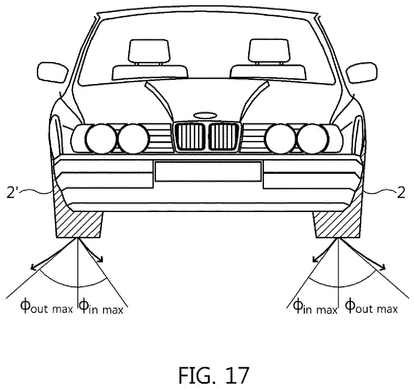

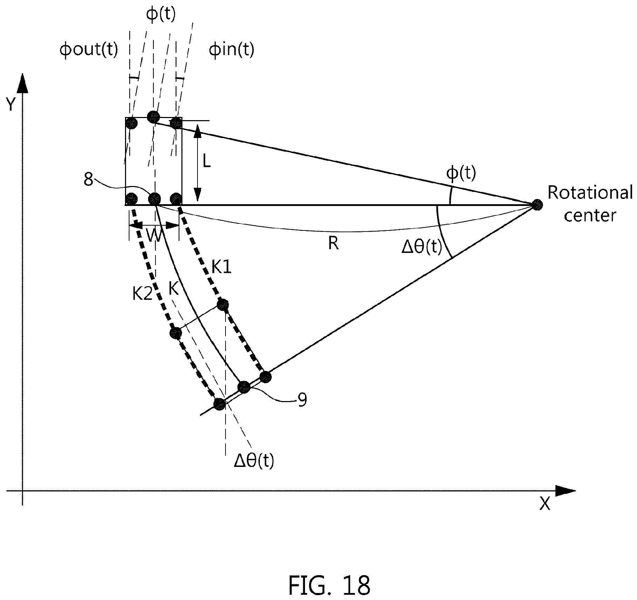

FIG. 16 is a view for illustrating a steering wheel sensor according to the second embodiment of a movement information extraction unit. FIG. 17 is a view for illustrating a method of calculating rotational angles of the left front wheel and the right front wheel of a vehicle in accordance with the second embodiment of a movement information extraction unit. FIG. 18 is a view for illustrating a method of extracting a movement position of a vehicle in accordance with the second embodiment of a movement information extraction unit.

The maximum angle of the steering wheel of the vehicle 1 can be seen from FIG. 16. In detail, it can rotate up to 535 degrees counterclockwise (that is, -535 degrees) and 535 degrees clockwise. The steering wheel sensor in the vehicle 1 is used to sense the angle of the steering wheel.

Referring to FIG. 17, the angles of a left front wheel 2 and a right front wheel 2' of a vehicle can be seen. In this case, the maximum outer angle $\phi_{out\,max}$ is 33 degrees and the maximum inner angle $\phi_{out\,max}$ is 39 degrees. However, the maximum outer and inner angles may depend on the kind of the vehicle and technological development.

The steering-based turning radius extractor 132b senses the rotational angle of the steering wheel 4 of the vehicle through the steering wheel sensor in the vehicle 1 and calculates the rotational angles of the left front wheel 2 and the right front wheel 2' of the vehicle on the basis of the rotational angle of the steering wheel 4, thereby extracting the turning radius of the vehicle 1.

That is, the steering-based turning radius extractor 132b can sense the angle of the steering wheel and then calculate the angles of the front wheels 2 and 2' of the vehicle on the basis of the angle of the steering wheel. A detailed method of obtaining the angles of the front wheels 2 and 2' of the vehicle 1 uses the following Equations.

[Equation 18]

$$\phi_{out} = W_{data} \times \frac{\phi_{out\,max}}{5350} = W_{data} \times \frac{33}{5350}$$

[Equation 19]

$$\phi_{in} = W_{data} \times \frac{\phi_{in\,max}}{5350} = W_{data} \times \frac{39}{5350}$$

In Equations 18 and 19, $\phi_{out}$ is the angle of the outer side of the front wheel of the vehicle 1 that is being turned and. $\phi_{in}$ is the angle of the inner side of the front wheel of the vehicle 1 that is being turned. Further, $\phi_{out\,max}$ that is the maximum outer angle is 33 degrees and. $\phi_{in\,max}$ that is the maximum inner angle is 39 degrees.

In detail, when the vehicle 1 is driven backward with the steering wheel turned clockwise, the angle of the inner side is calculated on the basis of the left front wheel 2 and the angle of the outer side is calculated on the basis of the right front wheel 2'. Further, when the vehicle 1 is driven backward with the steering wheel turned counterclockwise, the angle of the inner side is calculated on the basis of the right front wheel 2' and the angle of the outer side is calculated on the basis of the left front wheel 2.

Further, $W_{data}$ is a value obtained from the steering sensor, so it has a range of -535 degrees to 535 degrees.

Referring to FIG. 18, the principle by which the steering-based rotational radius extractor 132b extracts the rotational radius of the vehicle can be seen.

Further, the position 8 of the vehicle before moving backward (position coordinates of the axle center) and the position 9 of the vehicle after moving backward (coordinates of the axle center) are shown. It will be described in detail hereafter with reference to FIG. 18 and Equations 20 to 25.

In FIG. 18 and Equations 20 to 25, $\phi_{in}(t)$ is an angular change of the inner side of a front wheel of the vehicle 1 that is being turned and $\phi_{out}(t)$ is an angle change of the outer side of the front wheel of the vehicle 1 that is being turned.

Further, L is the distance between a front wheel axle and a rear wheel axle, W is the width of the vehicle, R is the turning radius of the axle center, and $\phi(t)$ is the angle of the center of the front wheel axle.

Further, K is the movement distance of the axle. The movement distance of the axle is the same as the movement distance of the vehicle.

Further, K1 is the movement distance of the inner rear wheel and K2 is the movement distance of the outer rear wheel. That is, the movement distance of the axle that is the movement distance of the vehicle 1 is the average of the movement distance of the inner wheel of the vehicle 1 and the movement distance of the outer wheel of the vehicle 1.

A detailed method of obtaining the movement distance of the vehicle 1 was described above in relation to the movement distance calculator 131, so the detailed description is not provided.

[Equation 20]

$$\tan \phi_{in}(t) = \frac{L}{R - \frac{W}{2}}$$

[Equation 21]

$$\tan \phi_{out}(t) = \frac{L}{R + \frac{W}{2}}$$

[Equation 22]

$$\tan \phi(t) = \frac{L}{R}$$

[Equation 23]

$$\frac{1}{\tan \phi_{in}(t)} + \frac{1}{\tan \phi_{out}(t)} = \frac{2R}{L}$$

[Equation 24]

$$\tan \phi(t) = \frac{2 \tan \phi_{in}(t) \tan \phi_{out}(t)}{\tan \phi_{in}(t) + \tan \phi_{out}(t)}$$

Equation 24 is obtained by combining Equation 22 and Equation 23.

[Equation 25]

$$R = \frac{L}{\tan \phi(t)}$$

Equation 25 is the final equation for extracting the turning radius of the vehicle 1. As described above, the steering-based turning radius extractor 132b can extract the turning radius of the vehicle 1 using Equations 20 to 25.
The steering-based movement position extractor 133b extracts the movement position of the vehicle 1 on the basis of the turning radius extracted by the steering-based turning radius extractor 132b and the movement distance extracted by the movement distance extractor 131. A detailed extraction method will be described with reference to Equations 16 and 17 and the following Equations 26 and 27.

[Equation 26]

$$K = \frac{K_1 + K_2}{2}$$

[Equation 27]

$$\Delta \theta(t) = \frac{K}{R}$$

In Equations 26 and 27, $\Delta\theta(t)$ is variation in the vehicle angle for time t, R is the turning radius of the axle, K is the movement distance of the axle, K2 is the movement distance of the outer rear wheel, and K1 is the movement distance of the inner rear wheel.

In detail, K1 and K2 are extracted by the movement distance extractor 131, K is obtained from Equation 26, and then $\Delta\theta(t)$ can be obtained by substituting the turning radius R extracted by the steering-based turning radius extractor 132b into Equation 27.

Accordingly, the center position after the axle is moved can be extracted by substituting $\Delta\theta(t)$ into $\Delta\theta(t)$ in Equations 16 and 17.

Hereafter, the movement-area aerial-view image creator 140 and the combined aerial-view image creator 150 are described with reference to FIG. 4.

The movement-area aerial-view image creator 140 creates a movement-area aerial-view image that is an aerial view for the area where the vehicle 1 is moved, on the basis of the information about movement of the vehicle extracted by the movement information extraction unit 130 through the first and second embodiments.

In detail, the past aerial-view image 45 that is the movement-area aerial-view image shown in FIG. 4 is created on the basis of the movement information.

The combined aerial-view image creation unit 150 combines the subsequent aerial-view image 25, which is created after the previous aerial-view image 15 shown in FIG. 4 is created, with the past aerial-view image 45 that is the movement-area aerial-view image.

Accordingly, the driver can see the aerial-view image 45 for the part not photographed by the camera unit 110, even if the vehicle is at the time point T+1 (1') after moving backward.

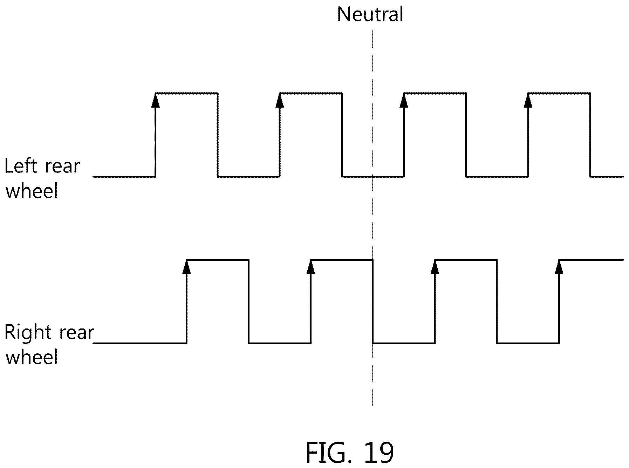

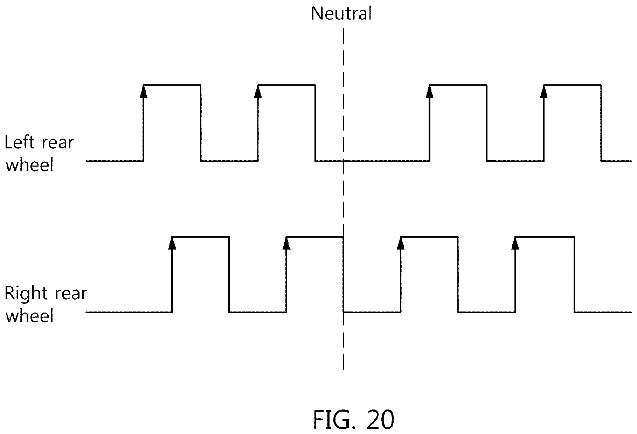

A gear-based extraction instructor and a sensor-based extraction instructor are described hereafter with reference to FIGS. 19 and 20.

FIG. 19 is a view for illustrating a method of extracting a change in the traveling direction of a vehicle by analyzing pattern changes in a wheel pulse for a rear wheel of a vehicle.

FIG. 20 is a view for illustrating a method of extracting a change in the traveling direction of a vehicle by analyzing pattern changes in a wheel pulse for a rear wheel of a vehicle.

When the wheel pulse sensor is designed to be able to sense the traveling direction of the vehicle (the wheel pulse sensor is a directional encoder), the wheel pulse sensor senses the traveling direction of the vehicle, but when the wheel pulse sensor cannot sense the traveling direction of the vehicle, the traveling direction of the vehicle is extracted through the gear-based extraction instructor and the sensor-based extraction instructor which will be described below.

The movement information extraction unit 130 may include a gear-based extraction instructor that gives an instruction to extract the information about movement of the vehicle when the vehicle is being driven backward by checking the gears of the vehicle.

It is possible to check the gears of the vehicle using a sensor or an ECU in the vehicle and it is known in the art, so it is not described in detail herein.

It is possible to extract a change in the traveling direction of the vehicle by analyzing pattern changes in wheel pulses for a left rear wheel and a right rear wheel of the vehicle.

In detail, referring to FIG. 19, for the wheel pulse pattern for the left rear wheel of the vehicle and the wheel pulse pattern for the right rear wheel of the vehicle before the vehicle changes to the neutral gear, it can be seen that a pattern having the order of 1) left rear wheel, 2) right rear wheel, 3) left rear wheel, and 4) right rear wheel from a rising edge is formed. It can be further seen that the pattern having the order of 1) left rear wheel, 2) right rear wheel, 3) left rear wheel, and 4) right rear wheel is maintained after the vehicle changes to the neutral gear.

In general, a vehicle is driven backward with the backward gear engaged, but a vehicle may be moved backward even though the backward gear of the vehicle is not engaged (for example, if the neutral gear is engaged), depending on the slope of a road and the state of the vehicle.

Accordingly, as described above, when the patterns of the wheel pulse signals for the left rear wheel and the right rear wheel are maintained before and after the neutral gear of the vehicle is engaged, it is estimated that the traveling direction of the vehicle has not changed.

For example, for a vehicle that has been moving forward before the neutral gear is engaged, it is estimated that the vehicle keeps moving forward even after the neutral gear is engaged. Further, for a vehicle that was moving backward before the neutral gear is engaged, it is estimated that the vehicle keeps moving backward even after the neutral gear is engaged.

Referring to FIG. 20, for the wheel pulse pattern for the left rear wheel of the vehicle and the wheel pulse pattern for the right rear wheel of the vehicle before the vehicle changes to the neutral gear, it can be seen that a pattern having the order of 1) left rear wheel, 2) right rear wheel, 3) left rear wheel, and 4) right rear wheel from a rising edge is formed. It can be further seen that the pattern is changed to a pattern having the order of 1) right rear wheel, 2) left rear wheel, 3) right rear wheel, and 4) left rear wheel after the vehicle changes to the neutral gear.

That is, in order to make the same pattern before the neutral gear is engaged and after the neutral gear is engaged, the wheel pulse signal (rising edge) ofthe left rear wheel should be sensed first after the vehicle changes to the neutral gear, but the wheel pulse signal (rising edge) of the right rear wheel is sensed first.

Accordingly, the patterns of the wheel pulse signals for the left rear wheel and the right rear wheel of the vehicle are changed before the vehicle changes to the neutral gear and after the vehicle changes to the neutral gear.

As a result, as described above, when the patterns ofthe wheel pulse signals for the left rear wheel and the right rear wheel are changed before and after the neutral gear of the vehicle is engaged, it is estimated that the traveling direction of the vehicle has been changed after the vehicle changed to the neutral gear.

For example, for a vehicle that was moving forward before the neutral gear is engaged, it is estimated that the vehicle is moved backward after the neutral gear is engaged. Further, for a vehicle that was moving backward before the neutral gear is engaged, it is estimated that the vehicle moves forward after the neutral gear is engaged.

The analysis of the repeated patterns for the left rear wheel and the right rear wheel was described on the basis ofthe rising edge, but the changes in pattern may be extracted on the basis of a falling edge.

Further, the movement information extraction unit 130 may include a sensor-based extraction instructor that determines whether the vehicle is moving backward by sensing the weight and acceleration of the vehicle through a gravity sensor or an acceleration sensor in the vehicle, and that gives an instruction to extract the information about movement of the vehicle when it is determined that the vehicle is moving backward.

In detail, the traveling direction of the vehicle 1 is analyzed by comparing the sensed signal and a predetermined signal, using a gravity sensor or an acceleration sensor in the vehicle.

The principle and operation of the gravity sensor or the acceleration sensor are well known in the art, so detailed description is not provided herein.

In this case, there is an advantage in that it is possible to sense that the vehicle is moving backward, even if the forward gear or the neutral gear of the vehicle, rather than the reverse gear, is engaged.

That is, the sensor-based extraction instructor gives an instruction to extract movement information when it is sensed that the vehicle 1 is moving backward.

A method of creating an image of the area around a vehicle according to the present invention is described hereafter.

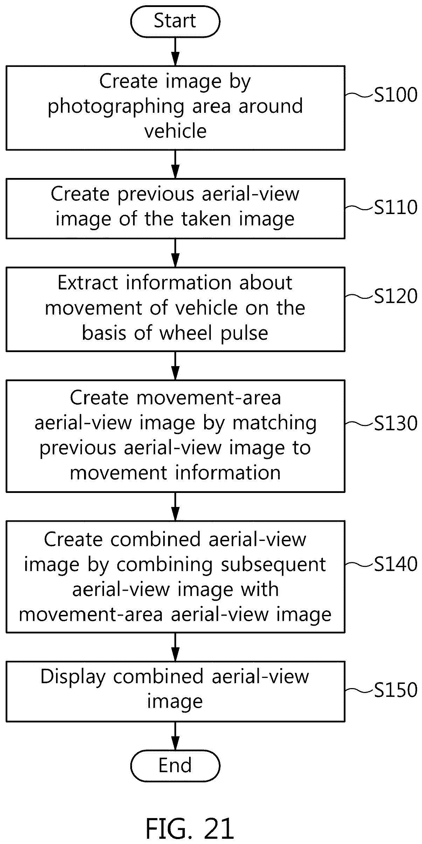

FIG. 21 is a flowchart of a method of creating an image of the area around a vehicle according to the present invention.

Referring to FIG. 21, a method of creating an image of the area around a vehicle according to the present invention includes: creating an image by photographing a peripheral area of a vehicle using a camera unit on the vehicle (S100); creating an aerial-view image by converting the captured image into data on a ground coordinate system projected with the camera unit as a visual point (S110); extracting information about movement of the vehicle on the basis of wheel pulses for a left wheel and right wheel of the vehicle, the wheel pulses created on the basis of the amount of rotation of the wheels of the vehicle by a wheel pulse sensor in the vehicle (S120); creating a movement-area aerial-view image, which is an aerial view of the area to which the vehicle has moved, by matching the previous aerial-view image to the movement information (S130); and creating a combined aerial-view image by combining an aerial-view image, which is created after the previous aerial-view image is created, with the movement-area aerial-view image (S140).

The method may further include displaying the combined aerial-view image on a display unit in the vehicle (S150) after the creating of a combined aerial-view image (S140).

The method of creating an image of the area around a vehicle according to the present invention has configurations corresponding to those of the apparatus 100 for creating an image ofthe area around a vehicle described above, so they are not described again herein.

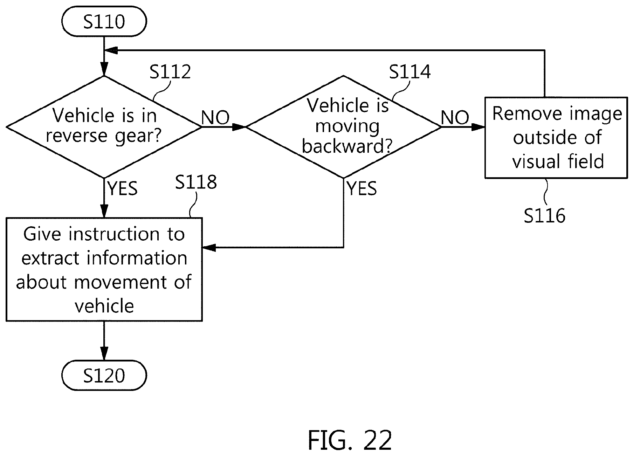

An embodiment of giving an instruction to extract information about movement of a vehicle in the method of creating an image of the area around a vehicle according to the present invention is described hereafter with reference to FIG. 22.

Referring to FIG. 22, determining whether the rearward gear is engaged in the vehicle (S112) is performed after the step S110. It is possible to check the gears of the vehicle using a sensor or an ECU in the vehicle and it is known in the art, so it is not described in detail herein.

When it is determined that the rearward gear is engaged in the step S112, giving an instruction to extract information about movement of the vehicle (S118) is performed and the movement information is extracted in the step S120.

However, when it is determined that the rearward gear is not engaged (for example, the forward or neutral gear is engaged) in the step S 112, the step S 114 is performed, thereby determining whether the vehicle is moving backward.

In order to determine whether the vehicle is moving backward, as described above, it is possible to change the patterns of wheel pulses or use a gravity sensor or an acceleration sensor in the vehicle.

When it is determined that the vehicle is moving backward (that is, the vehicle is moving backward even without the rearward gear engaged), the step S118 is performed, so an instruction to extract the information about movement of the vehicle is given. Accordingly, the movement information can be extracted in the step S120.

However, when it is determined that the vehicle is not moved backward in the step S114, removing an image outside of a visual field (S116) is performed. That is, the reason for this is that the vehicle is moving forward, so there is no need for displaying an image outside of the visual field of the camera on the vehicle.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. An apparatus for creating an image of an area around a vehicle, the apparatus comprising:

   an aerial-view image creation unit that creates an aerial-view image by converting an image of an area around a vehicle, which is taken by a camera unit mounted on the vehicle, into data on a ground coordinate system projected with the camera unit as a visual point;
   a movement information extraction unit that extracts information about movement of the vehicle on the basis of wheel pulses for a left wheel and a right wheel of the vehicle, the wheel pulses created on the basis of the amount of rotation of the wheels of the vehicle by a wheel pulse sensor in the vehicle;
   a movement-area aerial-view image creation unit that creates a movement-area aerial-view image, which is an aerial view of the area to which the vehicle has moved, by matching a previous aerial-view image created by the aerial-view image creation unit to the movement information; and
   a combined aerial-view image creation unit that combines an aerial-view image, which is created after the previous aerial-view image is created, with the movement-area aerial-view image.

2. The apparatus of claim 1, wherein the movement information extraction unit includes a movement distance extractor that extracts a movement distance of the vehicle on the basis of an average of a wheel pulse for the left wheel and a wheel pulse for the right wheel.

3. The apparatus of claim 2, wherein the movement information extraction unit includes a pulse-based turning radius extractor that extracts a turning radius of the vehicle on the basis of a difference between the wheel pulses for the left wheel and the right wheel.

4. The apparatus of claim 3, wherein the movement information extraction unit includes a pulse-based movement position extractor that extracts a position to which the vehicle has moved, on the basis of the turning radius extracted by the pulse-based turning radius extractor and the movement distance extracted by the movement distance extractor.

5. The apparatus of claim 2, wherein the movement information extraction unit includes a steering-based turning radius extractor that senses a steering rotation angle of the vehicle through a steering wheel sensor in the vehicle and extracts a turning radius of the vehicle by calculating rotational angles of a left front wheel and a right front wheel of the vehicle on the basis of the steering rotation angle.

6. The apparatus of claim 5, wherein the movement information extraction unit includes a steering-based movement position extractor that extracts a position to which the vehicle has moved, on the basis of the turning radius extracted by the steering-based turning radius extractor and the movement distance extracted by the movement distance extractor.

7. The apparatus of claim 1, wherein the movement information extraction unit includes a gear-based extraction instructor that gives an instruction to extract information about movement of the vehicle when the vehicle is moving backward by checking gears of the vehicle.

8. The apparatus of claim 7, wherein the gear-based extraction instructor extracts a change in a traveling direction of the vehicle by analyzing a change in a pattern of the wheel pulses for the left wheel and the right wheel when the vehicle is in a neutral gear.

9. The apparatus of claim 8, wherein a change in the traveling direction of the vehicle is extracted by analyzing a change in pattern of a rising edge or a falling edge of a wheel pulse repeated between the left wheel and the right wheel.

10. A method of creating an image of an area around a vehicle, the method comprising:

creating an aerial-view image by converting an image of an area around a vehicle, which is taken by a camera unit mounted on the vehicle, into data on a ground coordinate system projected with the camera unit as a visual point, by means of an aerial-view image creation unit;

extracting information about movement of the vehicle on the basis of wheel pulses for a left wheel and a right wheel of the vehicle, the wheel pulses created on the basis of the amount of rotation of the wheels of the vehicle by a wheel pulse sensor in the vehicle, by means of a movement information extraction unit;

creating a movement-area aerial-view image, which is an aerial view of the area to which the vehicle has moved, by matching a previous aerial-view image created by the aerial-view image creation unit to the movement information, by means of a movement-area aerial-view image creation unit; and

creating a combined aerial-view image by combining an aerial-view image, which is created after the previous aerial-view image is created, with the movement-area aerial-view image, by means of a combined aerial-view image creation unit.

11. The method of claim 10, wherein the extracting of movement information includes extracting a movement distance of the vehicle on the basis of an average of the wheel pulse for the left wheel and the wheel pulse for the right wheel.

12. The method of claim 11, wherein the extracting of movement information includes extracting a turning radius of the vehicle on the basis of a difference between the wheel pulses for the left wheel and the right wheel.

13. The method of claim 12, wherein the extracting of movement information includes extracting a position to which the vehicle has moved, on the basis of the turning radius extracted in the extracting of a turning radius and the movement distance extracted in the extracting of a movement distance.

14. The method of claim 11, wherein the extracting of movement information includes sensing a steering rotation angle of the vehicle through a steering wheel sensor in the vehicle, and extracting a turning radius of the vehicle by calculating rotational angles of a left front wheel and a right front wheel of the vehicle on the basis of the steering rotation angle.

15. The method of claim 14, wherein the extracting of movement information includes extracting a position to which the vehicle has moved, on the basis of the turning radius extracted in the extracting of a turning radius and the movement distance extracted in the extracting of a movement distance.

16. The method of claim 10, further comprising giving an instruction to extract the information about movement of the vehicle when the vehicle is moving backward by checking gears of the vehicle, after the creating of a previous aerial-view image.

17. The method of claim 16, wherein the giving of an instruction extracts a change in traveling direction of the vehicle by analyzing a change in a pattern of the wheel pulses for the left wheel and the right wheel when the vehicle is in a neutral gear.

18. The method of claim 17, wherein the change in the traveling direction of the vehicle is extracted by analyzing a change in a pattern of a rising edge or a falling edge of a wheel pulse repeated between the left wheel and the right wheel.

FIG. 1

<u>100</u>

110

Camera unit

120

Aerial-view
image creation
unit

130

Movement
information
extraction unit

160

Display unit

150

Combined
aerial-view
image creation
unit

140

Movement-area
aerial-view
image creation
unit

FIG. 2

FIG. 3

FIG. 4

FIG. 5

FIG. 6

FIG. 7

FIG. 8

61

FIG. 9

FIG. 10

Movement information extraction unit

131 — Movement distance extractor

132a — Pulse-based turning radius extractor

Pulse-based movement position extractor

130

133a

FIG. 11

Magnitude

Period

Count 1    Count 2    Count 3

Time

FIG. 12

FIG. 13

FIG. 14

**EP 3 128 499 A1**

FIG. 15
31

-535Degrees

535Degrees

4

FIG. 16

$\phi_{out\ max}$ $\phi_{in\ max}$    $\phi_{in\ max}$ $\phi_{out\ max}$

FIG. 17

FIG. 18

Neutral

Left rear
wheel

Right rear
wheel

FIG. 19

Neutral

Left rear
wheel

Right rear
wheel

FIG. 20

Start

Create image by
photographing area around
vehicle ~S100

Create previous aerial-view
image of the taken image ~S110

Extract information about
movement of vehicle on the
basis of wheel pulse ~S120

Create movement-area
aerial-view image by matching
previous aerial-view image to
movement information ~S130

Create combined aerial-view
image by combining subsequent
aerial-view image with
movement-area aerial-view image ~S140

Display combined aerial-view
image ~S150

End

FIG. 21

S110

S112

Vehicle is in
reverse gear?

NO

S114

Vehicle is
moving
backward?

NO

Remove image
outside of
visual field

S116

YES

S118

YES

Give instruction to
extract information
about movement of
vehicle

S120

FIG. 22

## INTERNATIONAL SEARCH REPORT

| International application No. |
| --- |
| **PCT/KR2015/003395** |

**A.    CLASSIFICATION OF SUBJECT MATTER**

*G08G 1/16(2006.01)i*

According to International Patent Classification (IPC) or to both national classification and IPC

**B.    FIELDS SEARCHED**

Minimum documentation searched (classification system followed by classification symbols)
G08G 1/16; B62D 6/10; B60R 1/00; B60W 30/06; B60R 1/08; B62D 6/00; B60W 40/02; B60R 21/00; G06T 7/20; B60W 30/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: vehicle, bird's-eye view, movement information, wheel pulse, synthesis

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2013-0073256 A (HYUNDAI MOTOR COMPANY) 03 July 2013<br>See abstract, claim 1 and figures 1-11. | 1-18 |
| Y | JP 2001-187553 A (MATSUSHITA ELECTRIC IND. CO., LTD.) 10 July 2001<br>See paragraph [0048], claims 1, 10 and figures 1-11. | 1-18 |
| Y | KR 10-2012-0051547 A (HYUNDAI MOTOR COMPANY) 22 May 2012<br>See abstract, claims 1-3 and figures 1-4. | 8-9,17-18 |
| A | KR 10-2014-0019575 A (HYUNDAI MOBIS CO., LTD.) 17 February 2014<br>See abstract, claims 1-5 and figures 1-8. | 1-18 |
| A | KR 10-2014-0039046 A (ROBERT BOSCH GMBH.) 31 March 2014<br>See abstract, claims 1-5 and figures 1-3. | 1-18 |

☐  Further documents are listed in the continuation of Box C.          ☒  See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 30 JUNE 2015 (30.06.2015) | **30 JUNE 2015 (30.06.2015)** |

| Name and mailing address of the ISA/**KR** | Authorized officer |
| --- | --- |
| Korean Intellectual Property Office<br>Government Complex-Daejeon, 189 Seonsa-ro, Daejeon 302-701,<br>Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/003395**

| Patent document cited in search report | Publication date | Patent family member | Publication date |
|---|---|---|---|
| KR 10-2013-0073256 A | 03/07/2013 | CN 103171552 A<br>JP 2013-133098 A<br>US 2013-0162825 A1 | 26/06/2013<br>08/07/2013<br>27/06/2013 |
| JP 2001-187553 A | 10/07/2001 | EP 1094337 A2<br>EP 1094337 A3<br>EP 1094337 B1<br>JP 3494434 B2<br>US 6483429 B1 | 25/04/2001<br>09/01/2002<br>17/03/2004<br>09/02/2004<br>19/11/2002 |
| KR 10-2012-0051547 A | 22/05/2012 | KR 10-1241518 B1 | 11/03/2013 |
| KR 10-2014-0019575 A | 17/02/2014 | CN 103568953 A<br>KR 10-1376210 B1<br>US 2014-0036063 A1 | 12/02/2014<br>21/03/2014<br>06/02/2014 |
| KR 10-2014-0039046 A | 31/03/2014 | CN 103608217 A<br>EP 2720906 A1<br>JP 2014-519444 A<br>US 2014-0204210 A1<br>WO 2012-171740 A1 | 26/02/2014<br>23/04/2014<br>14/08/2014<br>24/07/2014<br>20/12/2012 |

Form PCT/ISA/210 (patent family annex) (July 2009)

**EP 3 128 499 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080024772